# EUROPÄISCHE PATENTSCHRIFT

(11) **EP 1 373 106 B1**
(45) Veröffentlichungstag und Bekanntmachung des Hinweises auf die Patenterteilung: **14.09.2005**
(21) Anmeldenummer: 02737748.0
(22) Anmeldetag: 20.03.2002
(51) Int. Cl.: B65G 1/04

(54) **LAGERLIFT**
STORAGE LIFT
ELEVATEUR DE STOCKAGE

(30) Priorität: 23.03.2001 DE 10115754
(43) Veröffentlichungstag der Anmeldung: 02.01.2004
(73) Patentinhaber: Bellheimer Metallwerk GmbH, D-76752 Bellheim (DE)
(72) Erfinder: BOUCHE, Norbert, 76829 Landau (DE); DOSER, Hubert, 67346 Speyer (DE); SÜSS, Rolf, 76297 Stutensee (DE)
(74) Vertreter: Grünecker, Kinkeldey, Stockmair & Schwanhäusser Anwaltssozietät
(86) Internationale Anmeldenummer: PCT/DE2002/001072
(87) Internationale Veröffentlichungsnummer: WO 2002/076859

(56) Entgegenhaltungen:
- EP-A- 0 253 775
- US-A- 4 358 239
- US-A- 4 750 633

## Beschreibung

Die Erfindung betrifft einen Lagerlift mit sich gegenüberliegenden Regalsäulen, die eine Vielzahl von übereinander angeordneten Paaren von Stützprofilen für sich gegenüberliegende Seiten von ein- und auslagerbaren, an ihren sich gegenüberliegenden Enden mit Mitnahmetaschen versehenen Lagergutträgem aufweisen, sowie mit einem zwischen den Regalsäulen auf- und abbewegbaren Vertikalförderer, der mindestens einen ein Obertrumm und ein Untertrumm bildenden Kettentrieb mit zwei Mitnehmern aufweist, von denen jeweils einer zur Einleitung einer Horizontalbewegung in jeweils einen der Lagergutträger dient, um diesen vom Vertikalförderer auf ein Stützprofilpaar oder von einem Stützprofilpaar auf den Vertikalförderer zu überführen, und die den auf den Vertikalförderer überführten Lagergutträger während der Vertikalbewegung des Vertikalförderers gemeinsam in einer zentralen Position halten.

Lagerlifte der vorstehenden Art sind aus der DE 42 33 688 A1 bekannt. Um bei ihnen die Lagergutträger in die von den Stützprofilpaaren gebildeten Fächer einlagern und anschließend wieder auslagern zu können, verwendet man Kettentriebe mit Mitnehmern, die in jeweils eine von zwei an den sich gegenüberliegenden Enden der Lagergutträger angeordnete Mitnahmetaschen greifen. Die Kettentriebe und ihre Mitnehmer sind dabei so ausgelegt und angeordnet, daß ihre Umlenkräder die Enden der Lagergutträger seitlich überlappen und die Mitnehmer seitlich über die Ketten vorstehen, wie dies z.B. in der US 5 199 840 beschrieben ist. Der Nachteil einer derartigen Lösung besteht darin, daß die Breite des Vertikalförderers zwangsläufig größer sein muß als die Breite der Lagergutträger.

Der Erfindung liegt die Aufgabe zugrunde, einen Lagerlift der eingangs beschriebenen Art so auszubilden, daß die die Mitnehmer antreibenden Kettentriebe die Lagergutträger nicht mehr wie bisher seitlich überlappen müssen und daß folglich grundsätzlich auch ein einziger zentraler Kettentrieb zum Ein- und Auslagern der Lagergutträger ausreicht. Diese Aufgabe wird erfindungsgemäß dadurch gelöst, daß der Kettentrieb zwei seitlich und in der Höhe zueinander versetzte, äquidistante Obertrumms und Untertrumms bildende, gleich lange Ketten aufweist, daß die eine gerade Horizontalbewegung ausführenden Obertrumms kürzer sind als die eine einen kollisionsfreien Umlauf der Mitnehmer ermöglichende Senke passierenden Untertrumms, daß die höher gelegene Kette mit den oberen Enden und die tiefer gelegene Kette mit den unteren Enden zweier in Umlaufrichtung im Abstand voneinander angeordneter Koppelglieder verbunden ist, die von den Ketten während ihres Umlaufes in einer gegenüber diesen konstanten Lage gehalten werden, und daß die Koppelglieder um gleiche Beträge in entgegengesetzte Richtungen abgewinkelte Ausleger aufweisen, deren Enden die Mitnehmer bilden.

Der erfindungsgemäße Lagerlift bietet den Vorteil, daß bei ihm eine klare Trennung zwischen den Regalsäulen und dem von diesen begrenzten Schacht für den Vertikalförderer möglich ist und daß die Breite des Vertikalförderers nicht größer sein muß als die Breite der Lagergutträger.

Weitere Merkmale und Einzelheiten der Erfindung ergeben sich aus den Unteransprüchen und der nachstehenden Beschreibung einer in den beigefügten Zeichnungen dargestellten Ausführungsform der Erfindung. Es zeigen:
- Fig. 1: eine perspektivische Ansicht eines Lagerliftes, bei dem Teile der Gehäuseverkleidung und einer Regalsäule zum besseren Verständnis weggelassen wurden;
- Fig. 2: eine perspektivische Ansicht zweier Lagergutträger und der zu ihrer Ein- und Auslagerung dienenden Kettentriebe;
- Fig. 3: in vergrößertem Maßstab den vorderen der beiden in Fig. 2 dargestellten Kettentriebe;
- Fig. 4: einen Schnitt durch ein die Ketten der Kettentriebe miteinander verbindendes Koppelglied;
- Fig. 5: die perspektivische Darstellung einer zwischen den Ketten der Kettentriebe und den Koppelgliedern angeordneten Befestigungslasche;
- Fig. 6: die Position eines Koppelgliedes vor dem Eingriff eines Mitnehmers in eine Mitnahmetasche eines Lagergutträgers;
- Fig. 7: die Position eines Koppelgliedes nach dem Eingriff eines Mitnehmers in eine Mitnahmetasche eines Lagergutträgers und die
- Fig. 8-22: schematisch das Umlagem eines Lagergutträgers aus der in Fig. 8 dargestellten Position in die in Fig. 21 gezeigte Position.

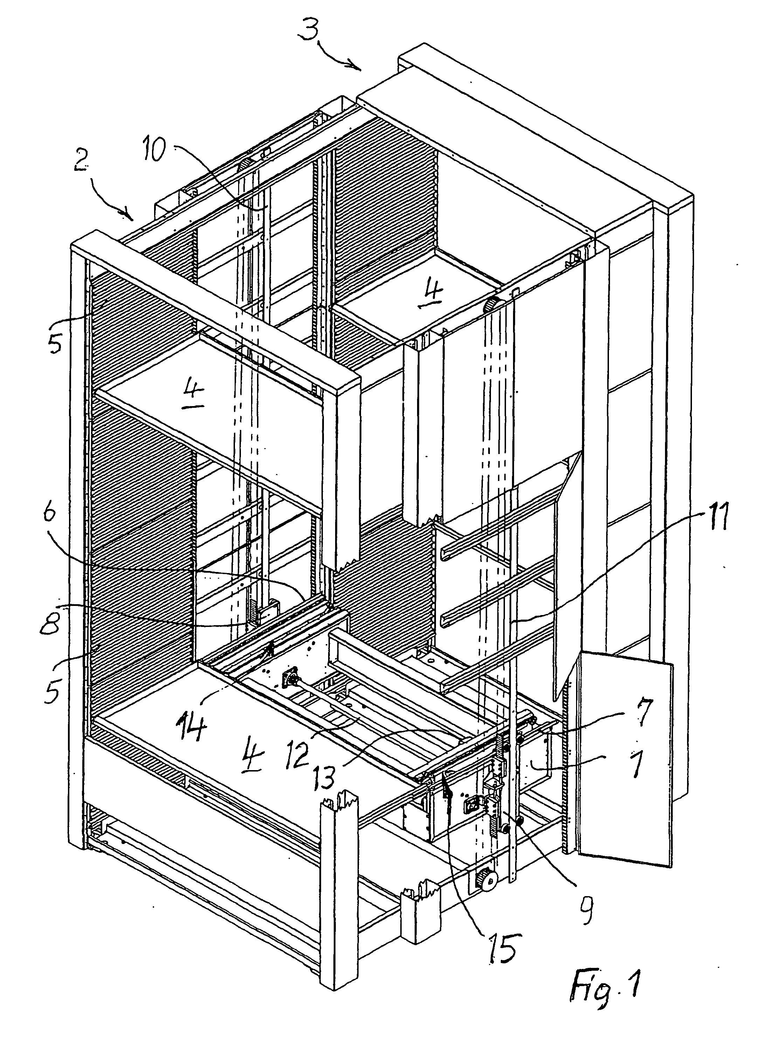

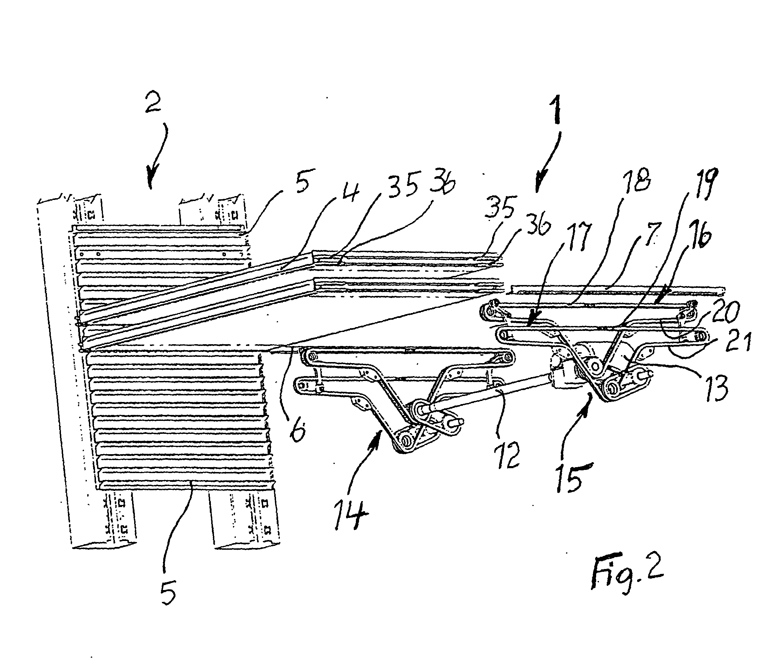

Figur 1 zeigt einen Lagerlift mit einem Vertikalförderer 1, der in einem zwischen zwei Regalsäulen 2 und 3 angeordneten Schacht auf- und abbewegbar ist, um Lagergutträger 4 ein- und auszulagem. Die Regalsäulen 2 und 3 sind an sich gegenüberliegenden Seiten mit Stützprofilen 5 versehen, die Fächer zur Ablage der Lagergutträger 4 bilden. Der Vertikalförderer 1 ist an seinen sich gegenüberliegenden Seiten mit zwei Stützschienen 6 und 7 ausgestattet, auf denen sich die Lagergutträger 4 während ihres Transportes abstützen. Geführt wird der Vertikalförderer 1 durch zwei Führungsschlitten 8 und 9 und diesen zugeordneten Führungsschienen 10 und 11. Um die Lagergutträger 4 im Bereich einer Beschickungs- und Entnahmeöffnung und im Bereich der Fächer der Regalsäulen 2, 3 auf den Vertikalförderer 1 überführen bzw. von diesem entfernen zu können, ist der Vertikalförderer 1 an seinen sich gegenüberliegenden Seiten und zwar zwischen den Stützschienen 6, 7 mit zwei über eine Welle 12 durch einen Motor 13 synchron antreibbaren Kettentrieben 14, 15 versehen, deren wesentliche Teile in den Figuren 2 - 5 dargestellt sind.

Jeder der beiden Kettentriebe 14 bzw. 15 weist zwei seitlich und in der Höhe zueinander versetzte, gleich lange Ketten 16 und 17 auf, von denen die jeweils höher und weiter innen gelegene Kette 16 als Zweifachkette ausgebildet ist. Die horizontal verlaufenden Obertrumms 18, 19 der Ketten 16 und 17 sind kürzer als ihre eine Senke passierenden Untertrumms 20, 21. Die beiden Ketten 16, 17 eines jeden Kettentriebes 14 bzw. 15 sind durch jeweils zwei Koppelglieder 22, 23 miteinander verbunden, die in entgegengesetzte Richtung abgewinkelte Ausleger 24, 25 aufweisen, an deren freien Enden 26 Rollen 27 gelagert sind, die Mitnehmer für die Lagergutträger 4 bilden.

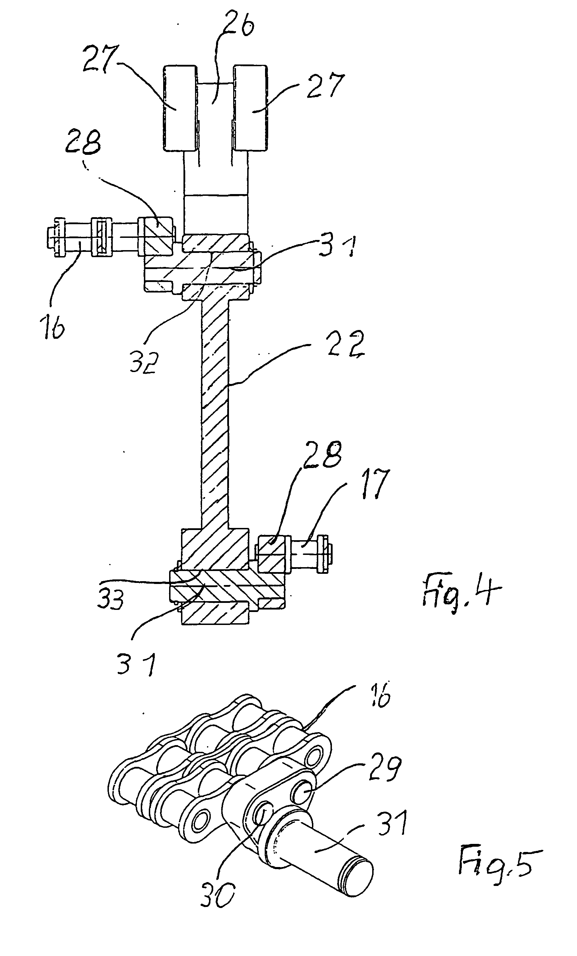

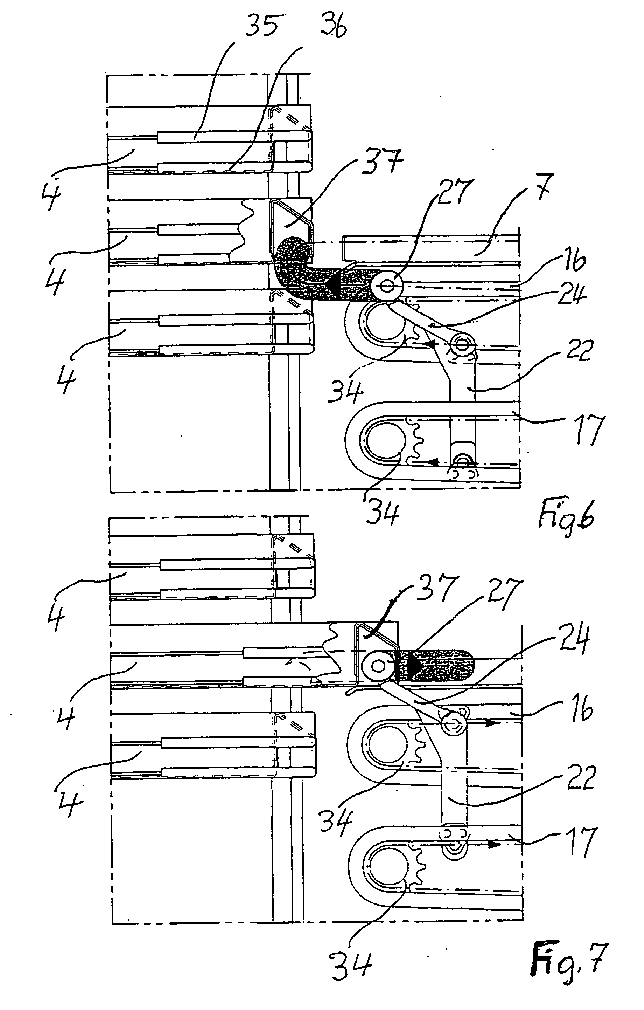

Die Figuren 4 und 5 zeigen anhand des Koppelgliedes 22 die Art der Verbindung der Koppelglieder mit den Kettensträngen 16 und 17. Jeder Kettenstrang 16 bzw. 17 ist mit jeweils einer Anschlußlasche 28 versehen, die von zwei verlängerten Kettenbolzen 29, 30 gehalten wird und im Bereich eines Vorsprunges jeweils einen Lagerzapfen 31 aufweist, der in Bohrungen 32, 33 des Koppelgliedes 22 geführt ist. Durch die Anbindung der Koppelglieder 22, 23 mittels der Anschlußlaschen 28 an die Ketten 16, 17 wird der Radius, auf dem die Rollen 27 sich in den Umlenkbereichen der Ketten 16 bewegen, gegenüber dem Umlenkradius der Ketten 16, 17 im Bereich ihrer Umlenkräder 34 verkleinert, wie dies aus den Fig. 6 und 7 erkennbar ist.

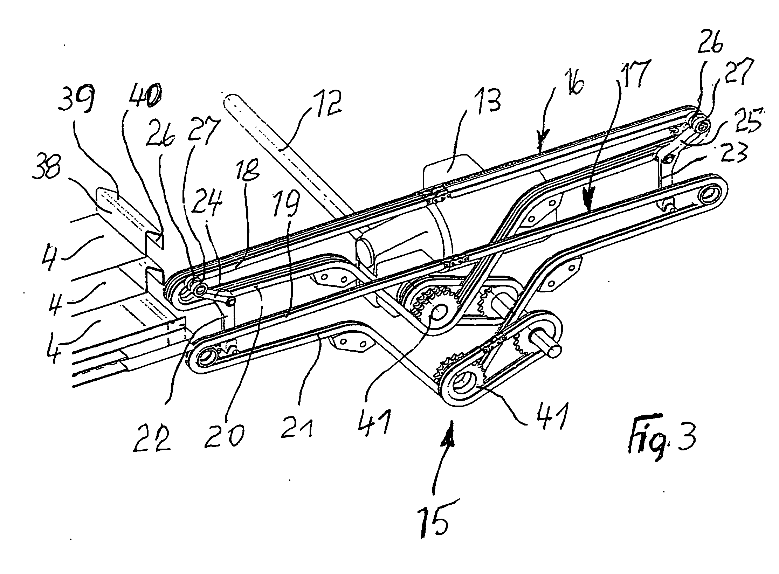

Die Lagergutträger 4 weisen im Bereich ihrer sich gegenüberliegenden Seiten jeweils ein Paar übereinander angeordneter Stützstege 35, 36 auf. Über jeweils einen dieser Stützstege stützen die Lagergutträger 4 sich auf den Stützprofilen 5 der Regalsäulen 2, 3 bzw. den Stützschienen 6, 7 des Vertikalförderers 1 ab. An ihrem vorderen und ihrem hinteren Ende weisen die Lagergutträger 4 Mitnahmetaschen 37 auf, die so ausgebildet sind, wie dies in Fig. 3 anhand der beiden oberen Lagergutträger 4 gezeigt ist, bei denen die Stützstege 35, 36 und die sie tragenden Seitenwände der Lagergutträger 4 zum besseren Verständnis weggeschnitten wurden. Jede Mitnahmetasche 37 hat die Form einer Greifleiste, deren Rückwand 38 über eine nach vom abfallende Schrägwand 39 mit einer gegenüber der Rückwand 38 verkürzten Vorderwand 40 verbunden ist. Aufgrund der beschriebenen Form der Mitnahmetaschen 37 kann der Abstand zwischen den jeweils übereinander angeordneten Stützprofilen 5 der Regalsäulen 2, 3 kleiner sein als bei rechteckiger Ausbildung des Querschnitts der Mitnahmetaschen 37.

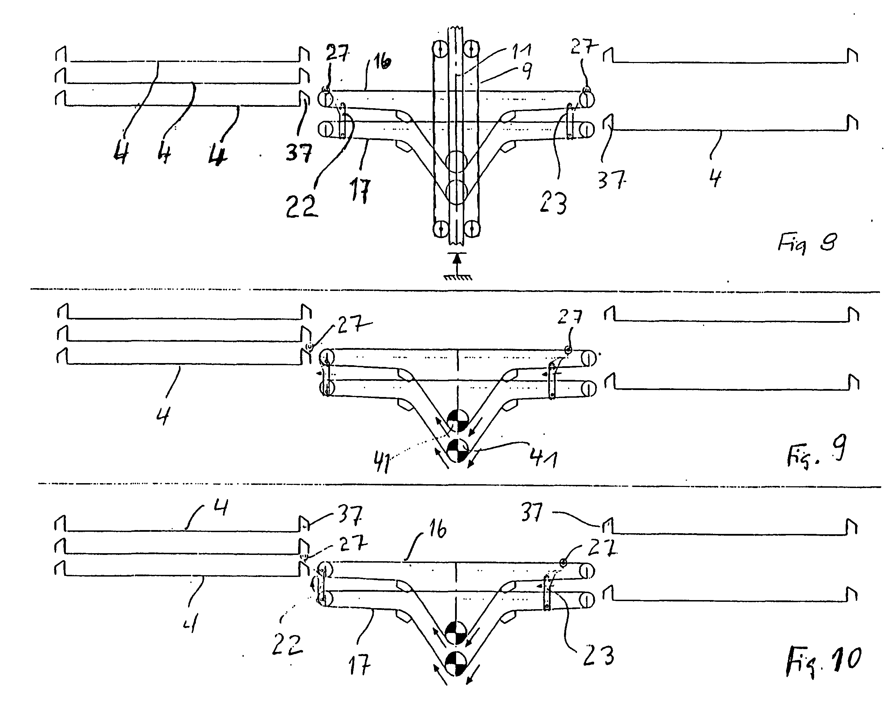

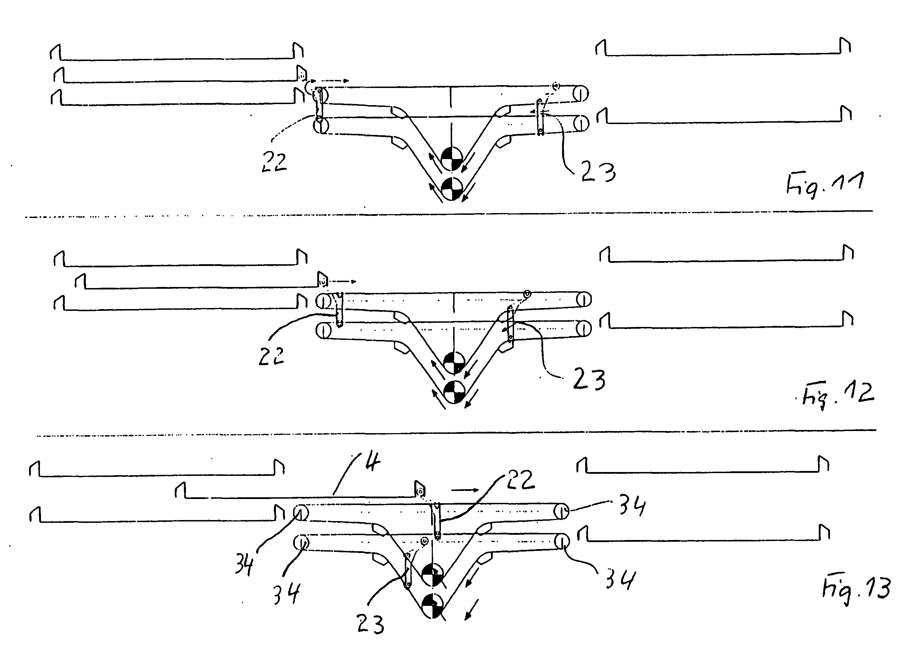

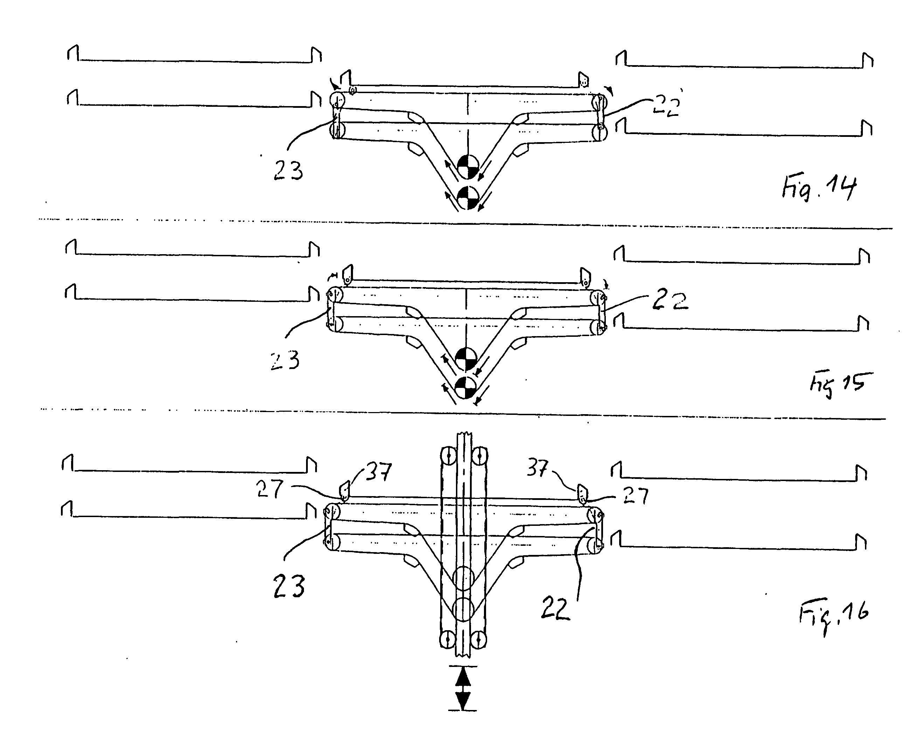

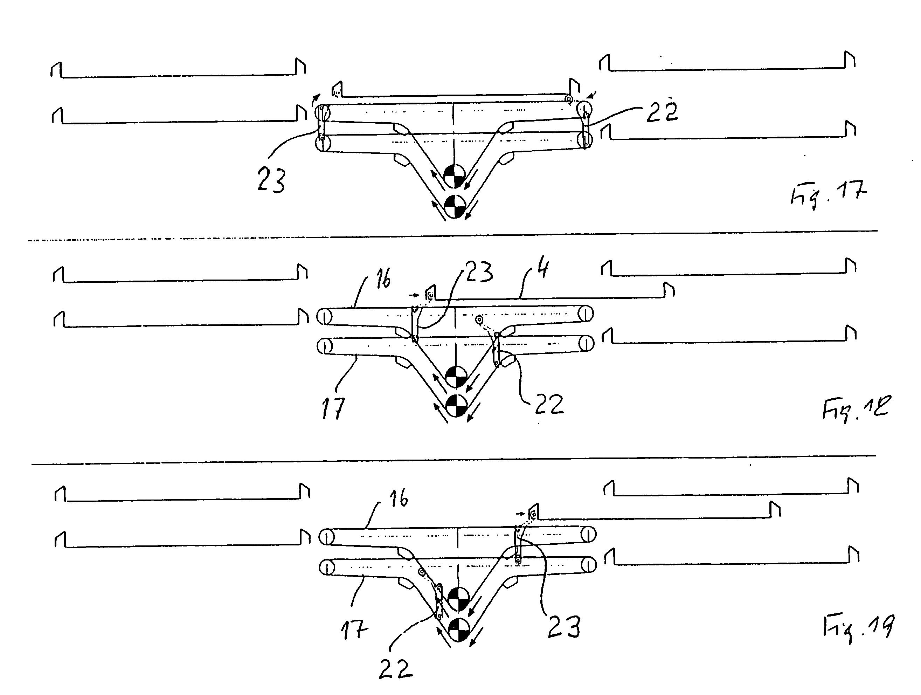

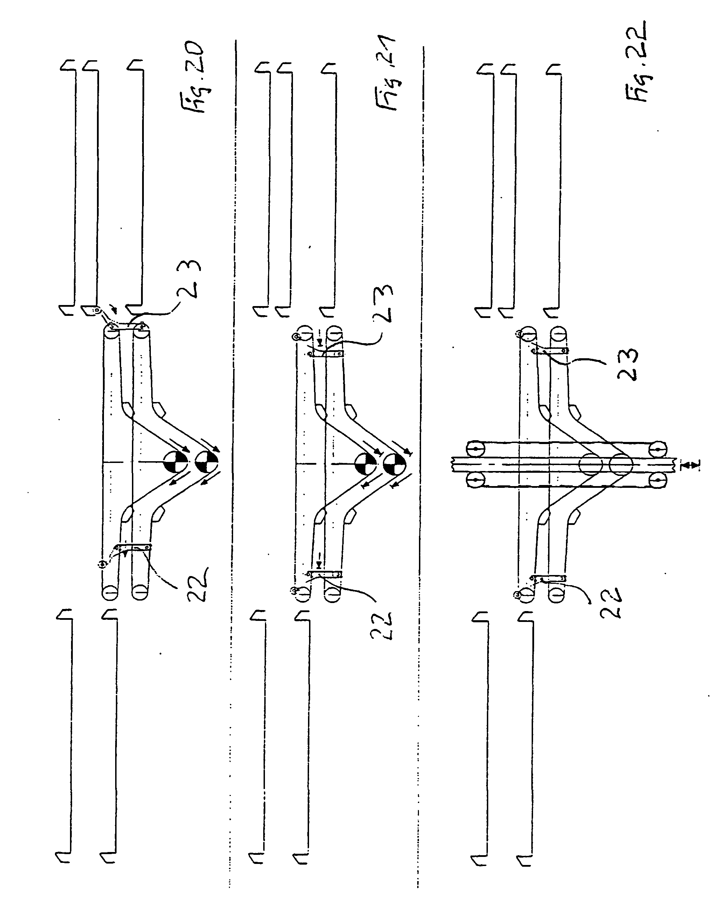

Sobald der Motor 13 die Antriebskettenräder 41 für die Ketten 16, 17 in Bewegung setzt, laufen die in den Fig. 8 bis 22 dargestellten Vorgänge ab. Die Fig. 9 und 10 zeigen, wie der von Rollen 27 gebildete linke Mitnehmer in eine Mitnahmetasche 37 einfährt, um den mittleren der drei eingezeichneten Lagergutträger 4 auf den Vertikalförderer 1 zu überführen. Sobald der Lagergutträger 4 die in Fig. 15 dargestellte Position erreicht hat, kann der Vertikalförderer 1 vertikal verfahren werden. Es ist jedoch auch möglich, den Lagergutträger 4 lediglich von der einen Regalsäule 2 in die jeweils andere Regalsäule 3 zu verlagern, wie dies aus Gründen der Vereinfachung in den Fig. 17 bis 20 gezeigt ist. Die Fig. 15 und 21 geben die Verhältnisse unmittelbar vor dem Abschalten des Motors 13 wieder, während in den Fig. 16 und 22 jeweils der Zustand des Kettentriebes dargestellt ist, in dem der Vertikalförderer 1 auf- oder abwärts bewegt werden kann.

## Patentansprüche

1. Lagerlift mit sich gegenüberliegenden Regalsäulen (2, 3) die eine Vielzahl von übereinander angeordneten Paaren von Stützprofilen (5) für sich gegenüberliegende Seiten von ein- und auslagerbaren, an ihren sich gegenüberliegenden Enden mit Mitnahmetaschen versehenen Lagergutträgern (4) aufweisen, sowie mit einem zwischen den Regalsäulen (2, 3) auf- und abbewegbaren Vertikalförderer (1), der mindestens einen ein Obertrumm und ein Untertrumm bildenden Kettentrieb (14, 15) mit zwei Mitnehmern (27) aufweist, von denen jeweils einer zur Einleitung einer Horizontalbewegung in jeweils einen der Lagergutträger dient, um diesen vom Vertikalförderer (1) auf ein Stützprofilpaar (5) oder von einem Stützprofilpaar (5) auf den Vertikalförderer zu überführen, und die den auf den Vertikalförderer (1) überführten Lagergutträger (4) während der Vertikalbewegung des Vertikalförderers gemeinsam in einer zentralen Position halten, **dadurch gekennzeichnet, daß** der Kettentrieb (14 bzw. 15) zwei seitlich und in der Höhe zueinander versetzte, äquidistante Obertrumms (18, 19) und Untertrumms (20, 21) bildende, gleich lange Ketten (16, 17) aufweist, daß die eine gerade Horizontalbewegung ausführenden Obertrumms (18, 19) kürzer sind als die eine einen kollisionsfreien Umlauf der Mitnehmer ermöglichende Senke passierenden Untertrumms (20, 21), daß die höher gelegene Kette (16) mit den oberen Enden und die tiefer gelegene Kette (17) mit den unteren Enden zweier in Umlaufrichtung im Abstand voneinander angeordneter Koppelglieder (22, 23) verbunden ist, die von den Ketten (16, 17) während ihres Umlaufes in einer gegenüber diesen konstanten Lage gehalten werden, und daß die Koppelglieder (22, 23) um gleiche Beträge in entgegengesetzte Richtungen abgewinkelte Ausleger (24, 25) aufweisen, deren Enden die Mitnehmer (27) bilden.

2. Lagerlift nach Anspruch 1, **dadurch gekennzeichnet, daß** die Ketten (16, 17) des Kettentriebes (14 bzw. 15) unterhalb einer durch eine Abstützung (6, 7) für die Lagergutträger (4) verlaufenden Ebene angeordnet sind, über die die Mitnehmer (27) hinausragen, sobald das obere Ende des zu ihnen gehörenden Koppelgliedes (22, 23) sich im Bereich des Obertrumms (18) der höher gelegenen Kette (16) befindet.

3. Lagerlift nach Anspruch 1 oder 2, **dadurch gekennzeichnet, daß** sein Vertikalförderer (1) mit zwei Kettentrieben (14, 15) versehen ist, die in einem Abstand voneinander angeordnet sind, der kleiner ist als die Breite der Lagergutträger (4).

4. Lagerlift nach Anspruch 1 oder 2, **dadurch gekennzeichnet, daß** die Mitnahmetaschen (37) für die Mitnehmer (27) von Greifleisten am vorderen und hinteren Ende der Lagergutträger (4) gebildet werden.

5. Lagerlift nach einem der Ansprüche 1 bis 4, **dadurch gekennzeichnet, daß** die Mitnehmer (27) als an den freien Enden (26) der Ausleger (24, 25) gelagerte, spielfrei in den Mitnahmetaschen (37) geführte Rollen ausgebildet sind.

6. Lagerlift nach einem der Ansprüche 1 bis 5, **dadurch gekennzeichnet, daß** die Mitnahmetaschen (37) jeweils eine Rückwand (38) und eine mit dieser über eine nach vorn abfallende Schrägwand (39) verbundene, gegenüber der Rückwand (38) verkürzte Vorderwand (40) haben.

7. Lagerlift nach einem der Ansprüche 1 bis 6, **dadurch gekennzeichnet, daß** die Ketten (16, 17) eines jeden Kettentriebes (14 bzw. 15) des Vertikalförderers (1) jeweils zwei Umlenkräder (34) und ein im Bereich der Senke angeordnetes Antriebskettenrad (41) passieren.

8. Lagerlift nach einem der Ansprüche 3 bis 7, **dadurch gekennzeichnet, daß** die mit den oberen Enden der Koppelglieder (22, 23) des jeweiligen Kettentriebes (14 bzw. 15) verbundenen Ketten (16) als Zweifachketten ausgebildet sind.

9. Lagerlift nach einem der Ansprüche 1 bis 8, **dadurch gekennzeichnet, daß** die Koppelglieder (22, 23) über Lagerzapfen (31) mit den Ketten (16, 17) verbunden sind.

10. Lagerlift nach Anspruch 9, **dadurch gekennzeichnet, daß** die Lagerzapfen (31) an zum jeweils gegenüberliegenden Kettentrumm einer jeden Kette (16 bzw. 17) versetzten Vorsprüngen von Anschlußlaschen (28) angeordnet sind.

## Claims

1. A storage lift having mutually opposite rack columns (2, 3) which have a multiplicity of pairs of supporting profiles (5) which are arranged one above the other and are intended for mutually opposite sides of storage-goods carriers (4), which can be stored and retrieved and are provided with carry-along pockets at their mutually opposite ends, and having a vertical conveyor (1) which can be moved up and down between the rack columns (2, 3) and has at least one chain drive (14, 15) which forms a top strand and a bottom strand and has two drivers (27), of which in each case one serves for introducing a horizontal movement into one of the storage-goods carriers in each case, in order to transfer the latter from the vertical conveyor (1) onto a pair of supporting profiles (5) or from a pair of supporting profiles (5) onto the vertical conveyor, and which, together, retain in a central position, during the vertical movement of the vertical conveyor (1), the storage-goods carrier (4) transferred onto the vertical conveyor, **characterized in that** the chain drive (14, 15) has two laterally and vertically offset chains (16, 17) of equal length which form equidistant top strands (18, 19) and bottom strands (20, 21), **in that** the top strands (18, 19), which execute a rectilinear horizontal movement, are shorter than the bottom strands (20, 21), which pass through a dip to allow collision-free circulation of the drivers, **in that** the higher-level chain (16) is connected to the top ends, and the lower-level chain (17) is connected to the bottom ends, of two coupling members (22, 23), which are spaced apart from one another in the direction of circulation and are retained, by the chains (16, 17), in a constant position in relation to the latter during circulation, and **in that** the coupling members (22, 23) have extension arms (24, 25) which are angled to the same extent in mutually opposite directions and of which the ends form the drivers (27).

2. The storage lift as claimed in claim 1, **characterized in that** the chains (16, 17) of the chain drive (14, 15) are arranged beneath a plane which runs through a supporting means (6, 7) for the storage-goods carriers (4) and beyond which the drivers (27) project as soon as the top end of the coupling member (22, 23) belonging to them is located in the region of the top strand (18) of the higher-level chain (16).

3. The storage lift as claimed in claim 1 or 2, **characterized in that** its vertical conveyor (1) is provided with two chain drives (14, 15) which are spaced apart from one another by a distance which is smaller than the width of the storage-goods carriers (4).

4. The storage lift as claimed in claim 1 or 2, **characterized in that** the carry-along pockets (37) for the drivers (27) are formed by gripping bars at the front and rear ends of the storage-goods carriers (4).

5. The storage lift as claimed in one of claims 1 to 4, **characterized in that** the drivers (27) are designed as rollers which are mounted at the free ends (26) of the extension arms (24, 25) and are guided in a play-free manner in the carry-along pockets (37).

6. The storage lift as claimed in one of claims 1 to 5, **characterized in that** the carry-along pockets (37) each have a rear wall (38) and a front wall (40) which is shorter than the rear wall (38) and is connected to the latter via an oblique wall (39) which slopes down in the forward direction.

7. The storage lift as claimed in one of claims 1 to 6, **characterized in that** the chains (16, 17) of each chain drive (14, 15) of the vertical conveyor (1) each pass over two deflecting wheels (34) and a driving chain wheel (41) arranged in the region of the dip.

8. The storage lift as claimed in one of claims 3 to 7, **characterized in that** the chains (16), which are connected to the top ends of the coupling members (22, 23) of the respective chain drive (14, 15), are designed as double chains.

9. The storage lift as claimed in one of claims 1 to 8, **characterized in that** the coupling members (22, 23) are connected to the chains (16, 17) via bearing journals (31).

10. The storage lift as claimed in claim 9, **characterized in that** the bearing journals (31) are arranged on protrusions of connection plates (28), the protrusions being offset in relation to the respectively opposite chain strand of each chain (16, 17).

## Revendications

1. Elévateur de stockage comportant des colonnes (2, 3) de rayonnages, situées en vis-à-vis et qui comportent une multiplicité de paires superposées de profilés de support (5) pour des côtés opposés de supports (4) pour marchandises à stocker qui peuvent être chargés et déchargés et comportent, sur leurs extrémités opposés, des logements d'entraînement, ainsi qu'un transporteur vertical (1) pouvant être soulevé et abaissé entre les colonnes (2, 3) de rayonnages et qui comporte au moins un dispositif d'entraînement à chaînes (14, 15) formant un brin supérieur et un brin inférieur et pourvu de deux organes d'entraînement (27), dont l'un respectivement est utilisé pour déclencher un déplacement horizontal respectivement dans l'un des supports pour marchandises à stocker, de manière à transférer ce support du transporteur vertical (1) sur une paire (5) de profilés de support, ou d'une paire (5) de profilés de support sur le transporteur vertical, et maintenir en commun, dans une position centrale, le support (4) pour marchandises à stocker, transférées sur le transporteur vertical (1), pendant le déplacement vertical du transporteur vertical, **caractérisé en ce que** le dispositif d'entraînement à chaînes (14 ou 15) comporte deux chaînes de même longueur (16, 17) équidistantes, qui sont décalées latéralement et en hauteur l'une par rapport à l'autre et forment les brins supérieurs (18, 19) et les brins inférieurs (20, 21), que les brins supérieurs (18, 19), qui exécutent un déplacement horizontal rectiligne, sont plus courts que les brins inférieurs (20, 21) qui franchissent un renfoncement permettant une circulation sans collision des organes d'entraînement, que la chaîne plus haute (16) est reliée aux extrémités supérieures et la chaîne plus basse (17) est reliée aux extrémités inférieures de deux organes de couplage (22, 23) disposés à distance l'un de l'autre dans la direction de circulation et qui sont retenus par les chaînes (16, 17) pendant leur circulation dans une position constante par rapport à ces dernières et que les organes de couplage (22, 23) comportent des bras en console (24, 25) qui sont coudés à un même degré dans des directions opposées et dont les extrémités forment les organes d'entraînement (27).

2. Elévateur de stockage selon la revendication 1, **caractérisé en ce que** les chaînes (16, 17) du dispositif d'entraînement à chaînes (14, 15) sont disposées au-dessous d'un plan qui passe par un dispositif d'appui (6, 7) pour les supports (4) pour marchandises à stocker et au-dessus duquel les organes d'entraînement (27) font saillie dès que l'extrémité supérieure de l'organe de couplage (22, 23), qui leur est associé, est situé dans la zone du brin supérieur (18) de la chaîne la plus élevée (16).

3. Elévateur de stockage selon la revendication 1 ou 2, **caractérisé en ce que** son transporteur vertical (1) est pourvu de deux dispositifs d'entraînement à chaînes (14, 15) qui sont disposés à une distance réciproque qui est inférieure à la largeur des supports (4) pour marchandises à stocker.

4. Elévateur de stockage selon la revendication 1 ou 2, **caractérisé en ce que** les logements d'entraînement (37) pour les organes d'entraînement (27) sont formés par des barrettes de préhension sur l'extrémité avant et sur l'extrémité arrière des support (4) pour marchandises à stocker.

5. Elévateur de stockage selon l'une des revendications 1 à 4, **caractérisé en ce que** les organes d'entraînement (27) sont agencés sous la forme de galets, qui sont montés sur les extrémités libres (26) des bras en console (24, 25) et sont guidés sans jeu dans les logements d'entraînement (37).

6. Elévateur de stockage selon l'une des revendications 1 à 5, **caractérisé en ce que** les logements d'entraînement (37) possèdent respectivement une paroi arrière (38) et une paroi avant (40) qui est reliée à la paroi arrière par l'intermédiaire d'une paroi oblique (39) qui descend vers l'avant, et est raccourcie par rapport à la paroi arrière (38).

7. Elévateur de stockage selon l'une des revendications 1 à 6, **caractérisé en ce que** les chaînes (16, 17) de chaque dispositif d'entraînement à chaînes (14 et 15) du transporteur vertical (1) circulent respectivement autour de deux roues de renvoi (34) et d'une roue motrice à chaîne (41) disposée dans la zone du renfoncement.

8. Elévateur de stockage selon l'une des revendications 3 à 7, **caractérisé en ce que** les chaînes (16), qui sont reliées aux extrémités supérieures des organes de couplage (22, 23) du dispositif respectif d'entraînement à chaînes (14 et 15) sont agencées sous la forme de chaînes doubles.

9. Elévateur de stockage selon l'une des revendications 1 à 8, **caractérisé en ce que** les organes de couplage (22, 23) sont reliés aux chaînes (16, 17) par l'intermédiaire de tourillons (31).

10. Elévateur de stockage selon la revendication 9, **caractérisé en ce que** les tourillons (31) sont disposés sur des appendices saillants de pattes de raccordement (28), qui sont décalés par rapport au brin respectivement opposé de chaque chaîne (16 ou 17).
